Europäisches Patentamt

European Patent Office

Office européen des brevets

(11) Veröffentlichungsnummer: **0 411 289 A1**

(12) **EUROPÄISCHE PATENTANMELDUNG**

(21) Anmeldenummer: 90111555.0

(22) Anmeldetag: **19.06.90**

(51) Int. Cl.5: **B01D 53/08**, B01J 8/12

(30) Priorität: **03.08.89 DE 8909384 U**

(43) Veröffentlichungstag der Anmeldung:
**06.02.91 Patentblatt 91/06**

(84) Benannte Vertragsstaaten:
**AT CH DE FR LI NL**

(71) Anmelder: **H. Krantz GmbH & Co.Co.**
**Krantzstrasse 7**
**D-5100 Aachen(DE)**

(72) Erfinder: **Benzel, Martin, Dipl.-Ing.**
**Muffeter Weg 8**
**D-5100 Aachen(DE)**

(74) Vertreter: **Bauer, Hubert, Dipl.-Ing.**
**Am Keilbusch 4**
**D-5100 Aachen(DE)**

(54) Schüttbettfilter.

(57) Damit sich ein Schüttbettfilter durch einen einfachen Aufbau und eine sichere Wirkungsweise auszeichnet und insbesondere Fremdkörper im Absorptionsmittel dessen exakt steuerbaren Abzug nicht gefährden oder beeinträchtigen, wird eine Staueinrichtung aus einer ebenen Platte (6) vorgeschlagen. Infolge des gewählten Abstandes zwischen der Platte (6) und den Unterkanten von winkelförmigen Profilen (5) sowie infolge des gewählten Abstandes zwischen benachbarten Durchlaßöffnungen (6) in der Platte (5) sowie infolge der versetzten Anordnung der durch die winkelförmigen Profile (5) begrenzten Durchlaßöffnungen (7) gegenüber den in der Platte (6) vorgesehenen Durchlaßöffnungen (8) häuft sich Adsorptionsmittel auf der Oberseite der Platte (6) an. Durch horizontal hin- und herverfahrbare Schieber (9) wird das auf der Platte (6) angehäufte Adsorptionsmittel verschoben und gelangt in den Bereich der Platte (6), die mit den Durchlaßöffnungen (8) versehen ist.

FIG.1

EP 0 411 289 A1

## SCHÜTTBETTFILTER

Die Erfindung betrifft ein Schüttbettfilter zum Reinigen von gas- und/oder dampfförmigen Medien. Das Filter besteht aus einem ein Adsorptionsmittel aufnehmenden Behälter, der eine obere Zuführöffnung und eine untere Abführöffnung für das Adsorptionsmittel aufweist. Im Behälterinnern wird eine Schüttgutsäule aus dem Adsorptionsmittel gebildet und vom zu reinigenden Medium durchströmt. Ein sich über einen horizontalen Querschnitt des Behälterinnenraums erstreckender Rost stützt die Schüttgutsäule ab und besteht aus in Abständen angeordneten, winkelförmigen Profilen und einer unter den Profilen angeordneten Staueinrichtung. Die winkelförmigen Profile begrenzen von oben nach unten keilförmig verengte Durchlaßöffnungen für das Adsorptionsmittel. Die Staueinrichtung weist gleichfalls Durchlaßöffnungen auf und ist zusätzlich mit horizontal verschiebbaren Elementen ausgestattet.

Ein derartiges Schüttbettfilter ist aus der DE 32 28 984 A1 bekannt. Durch die Ausbildung des die Schüttgutsäule abstützenden Rostes soll insbesondere die zur Strömung des Adsorptionsmittel entgegengesetzte Strömung des zu reinigenden Gases nicht beeinträchtigt werden. Dafür ist im wesentlichen vorgesehen, daß die winkelförmigen Profile einen Tragrost bilden, der aus jalousieartigen, mindestens zweiteiligen, symmetrischen Dächern besteht und Dachlücken in Form von Spalten zwischen den winkelförmigen Profilen beläßt, die durch an der Unterseite des Tragrostes angeordnete Schieber absperrbar sind. Bei der Durchströmung des Adsorptionsmittels in entgegengesetzter Richtung zur Strömung des zu reinigenden Gases läßt sich aber eine Gasströmung nur aufrechterhalten, wenn von einer vollständigen Absperrung der im Tragrost vorgesehenen Durchlaßöffnungen abgesehen wird, was zwar durch die Ausbildung des Tragrostes aus mindestens zweiteiligen Dächern gelingt, jedoch einen entsprechend vergrößerten Materialaufwand für den Tragrost erfordert.

Aus der DE 34 06 413 A1 ist auch bereits ein Schüttbettfilter der vorbeschriebenen Art bekannt, bei dem der Rost nicht aus mindestens zweiteilige Dächer bildenden Winkelprofilen bestehen muß, sondern für jedes Dach ein Winkelprofil ausreicht, wenn dieses mit Perforationen versehen ist. Unterhalb der Winkelprofile ist ein horizontal hin- und herverschiebbarer Gitterrost angeordnet, dessen Felder im Bereich der durch die Winkelprofile begrenzten Durchlaßöffnungen durch Trägerprofile, über die der Gitterrost verschiebbar ist, versperrt sind.

Die jeweils versperrten Felder im Gitterrost werden über die Durchlaßöffnungen zwischen den Winkelprofilen mit Adsorptionsmittel befüllt. So wie der Gitterrost horizontal verschoben wird und die befüllten Felder aus dem Bereich der Trägerprofile gelangen, erfolgt die Entleerung der befüllten Felder und eine Befüllung der nunmehr in den Bereich der Durchlaßöffnungen zwischen den Winkelprofilen gelangenden Felder. Die Wirkungsweise dieses im Aufbau verhältnismäßig einfachen Adsorptionsfilters wird jedoch immer dann gestört, wenn sich, wie im praktischen Betrieb unvermeidbar, Fremdkörper im Adsorptionsmittel befinden, deren Abmessungen die Korngröße des Adsorptionsmittels wesentlich überschreiten. Solche Fremdkörper führen nämlich zu einer Blockage des Gitterrostes, da dieser mit verhältnismäßig engen Toleranzen zwischen den Trägerprofilen und den Unterkanten der die Dächer des Rostes bildenden Winkelprofile angeordnet sein muß. Ist nämlich beispielsweise der besonders kritische Abstand zwischen den Unterkanten der Winkelprofile und der Oberseite des Gitterrostes mit Rücksicht auf Fremdkörper entsprechend deren maximal zu erwartenden Abmessungen gewählt, so besteht die Gefahr, daß Adsorptionsmittel unkontrollierbar durch Felder abströmt, die nicht durch die Trägerprofile verschlossen sind.

Der Erfindung liegt die Aufgabe zugrunde, ein Schüttbettfilter der eingangs beschriebenen Art so auszubilden, daß es sich sowohl durch einen einfachen Aufbau als auch durch eine sichere Wirkungsweise auszeichnet und insbesondere Fremdkörper im Adsorptionsmittel dessen exakt steuerbaren Abzug nicht gefährden oder beeinträchtigen. Darüber hinaus soll das Schüttbettfilter mit einem die Schüttgutsäule abstützenden Rost versehen sein, der es auch ermöglicht, beispielsweise im Brandfall die gesamte Schüttgutsäule spontan den Rost passieren zu lassen, um den Behälter vollständig von Adsorptionsmittel zu entleeren.

Zur Lösung dieser Aufgabe wird von einem Filter der im Oberbegriff des Anspruchs 1 genannten gattungsgemäßen Art ausgegangen, welcher erfindungsgemäß die im kennzeichnenden Teil desselben angegebenen Merkmale aufweist.

Die erfindungsgemäße Staueinrichtung aus einer ebenen Platte ist besonders einfach in ihrem Aufbau und bedarf keiner zusätzlichen Mittel, um entsprechend des großzügig zu bemessenden Abstandes zwischen der Oberseite der Platte und den Unterkanten der winkelförmigen Profile Adsorptionsmittel in entsprechender Menge anzuhäufen. Ein weiterer Parameter für die sich auf der ebenen Platte anhäufende Menge des Adsorptionsmittels stellt der gewählte Abstand zwischen benachbarten Durchlaßöffnungen in der Platte dar. Schließlich wird auch noch die angehäufte Menge des Adsorptionsmittels durch die versetzte Anordnung der durch die winkelförmigen Profile begrenzten Durchlaßöffnungen gegenüber den in der Platte vorgesehenen Durchlaßöffnungen bestimmt. Mit Hilfe der über die Oberseite der Platte horizontal hin- und herverfahrbaren, vertikal ausgerichteten Schieber läßt sich in sehr einfacher Weise das auf der Platte angehäufte Adsorptionsmittel in den Bereich der in der Platte vorgesehenen Durchlaßöffnungen verschieben, so daß durch den Verschiebeweg und das Intervall, in dem die Schieber betätigt werden, die Menge an Adsorptionsmittel steuerbar ist, welche den Rost, der im übrigen die Schüttgutsäule abstützt, passiert.

Nach einer Ausgestaltung der Erfindung sind die durch die winkelförmigen Profile begrenzten Durchlaßöffnungen und die in der ebenen Platte vorgesehenen Durchlaßöffnungen durch sich über eine Querschnittsabmessung des Behälterinnern erstreckende Schlitze gebildet.

Die schlitzförmige Ausbildung der Durchlaßöffnungen vereinfacht die Anordnung der winkelförmigen Profile und ermöglicht es auch, die Platte aus einzelnen Rechteckprofilen zusammenzusetzen.

Nach einer weiteren Ausgestaltung der Erfindung ist der senkrechte Abstand benachbarter Schlitze in der ebenen Platte um einen Sicherheitsbetrag größer als die Breite der Grundfläche einer durch den Schüttwinkel und den Abstand der Platte von den Unterkanten der winkelförmigen Profile definierten Adsorptionsmittelanhäufung.

Durch diese Ausgestaltung läßt sich gewährleisten, daß ein unbeabsichtigter Adsorptionsmittelabfluß während der Stillstandszeiten der Schieber unterbunden ist.

Eine besonders wesentliche Ausgestaltung der Erfindung sieht vor, die über die Oberseite der Platte hin- und herverfahrbaren Schieber in einer wesentlich niedigeren Höhe auszuführen als der Abstand zwischen der Oberseite der Platte und den Unterkanten der winkelförmigen Profile.

Um das auf der Platte angehäufte Adsorptionsmittel in den Bereich der in der Platte vorgesehenen Durchlaßöffnungen zu verschieben, genügt es, wenn die Schieberhöhe wesentlich niedriger ist als die Höhe der Adsorptionsmittelanhäufungen. Die extrem niedrige Höhe der Schieber ermöglicht einen Abstand zwischen den Unterkanten der winkelförmigen Profile und den Oberkanten der Schieber, der deutlich größer sein kann als die maximalen Abmessungen von im Adsorptionsmittel zu erwartender Fremdkörper. Eine Blockage der Schieber und damit eine Behinderung des Adsorptionsmittelabzugs läßt sich somit völlig ausschließen.

Wenn gemäß einer weiteren Ausgestaltung der Erfindung unabhängig von den über die Oberseite der Platte hin-und herverfahrbaren Schiebern die Platte selbst durch eine horizontale Verlagerung in eine Position überführbar ist, bei der die durch die winkelförmigen Profile begrenzten Durchlaßöffnungen mit den in der Platte vorgesehenen Durchlaßöffnungen fluchten, so garantiert diese Position der Platte einen kontinuierlichen Abzug der gesamten im Behälterinnern befindlichen Schüttgutsäule, so daß es dazu eines anhaltenden Hin- und Herverfahrens der Schieber nicht bedarf, um möglichst schnell das im Behälter befindliche Adsorptionsmittel vollständig abzuziehen.

Da derartige Schieber über Bereiche in einer Länge von 12 bis 15 m angeordnet sein können, sieht eine Ausgestaltung der Erfindung schließlich noch vor, daß die Schieber und/oder die Platte jeweils beiderseits des Behälters mit umsteuerbaren Antriebseinrichtungen versehen sind, so daß die Antriebskraft übertragende Kupplungselemente der Schieber bzw. der Platte ausschließlich auf Zug beansprucht werden.

Durch diese Ausgestaltung lassen sich Schubbeanspruchungen vermeiden, welche speziell ausgebildete Führungen für die Schieber bzw. die Platte oder aber gegen hohe Knickbelastungen entsprechend dimensionierte Schubstangen erfordern würden. Es ist daher besonders vorteilhaft insbesondere die Schieber ausschließlich hin- und herzuziehen, wobei als Kupplungselemente ausgebildete Stangen auch gelenkig mit den Schiebern verbunden sein können, so daß im Wartungs- oder Reparaturfall die Schieber in leicht zugängliche Montagebereiche hineingezogen werden können.

In der Zeichnung ist ein Ausführungsbeispiel des erfindungsgemäßen Schüttbettfilters schematisch dargestellt. Es zeigen:

Fig. 1 einen vertikalen Querschnitt und
Fig. 2 einen Ausschnitt "Z" aus Fig. 1 in vergrößertem Maßstab.

Das Schüttbettfilter besteht im wesentlichen aus einem abgebrochen dargestellten quaderförmigen Behälter 1, der im nicht dargestellten deckelseitigen Bereich mit einer Zuführöffnung für im Innern des Behälters 1 eine Schüttgutsäule 2 bildendes Adsorptionsmittel aufweist. Über gleichfalls nicht dargestellte, an gegenüberliegenden perforierten Seitenwandbereichen des Behälters 1 angeschlossene Zu- und Abführleitungen wird das zu reinigende bzw. gereinigte Gas in konventioneller Weise vorzugsweise mehrmals in horizontal übereinander verlaufenden Strömungswegen quer durch die Schüttgutsäule 2 geleitet. Dabei erfolgt die erste Durchströmung der Schüttgutsäule mit dem den höchsten Schadstoffanteil aufweisenden Rohgas im unteren Bereich. Das so vorgereinigte Gas durchströmt sodann die Schüttgutsäule 2 in zunehmend höheren Bereichen, so daß schließlich aus dem Behälter 1 Reingas austritt, das zuletzt das im obersten Bereich der Schüttgutsäule befindliche, noch am geringsten kontaminierte Adsorptionsmittel durchströmt hat.

Das bis zu einem vorgegebenen maximalen Grad kontaminierte Adsorptionsmittel wird über eine Abführöffnung 3 im bodenseitigen Bereich des Behälters 1 abgezogen. Über die Zuführöffnung im deckenseitigen Bereich wird eine der verbrauchten, abgezogenen Absorptionsmittelmenge entsprechende frische Adsorptionsmittelmenge in den Behälter 1 eingeleitet und auf diese Weise die Schüttgutsäule 2 kontinuierlich oder auch diskontinuierlich erneuert.

Um den Adsorptionsmittelabzug mengenmäßig exakt gesteuert und auch gleichmäßig über den Querschnitt der Schüttgutsäule 2 bewerkstelligen zu können, wird diese durch einen sich über einen horizontalen Querschnitt des Behälterinnenraums erstreckenden Rost 4 abgestützt, der im unteren Bereich des Behälters 1 angeordnet ist.

Der Rost 4 besteht im wesentlichen aus winkelförmigen, in parallelen Abständen nebeneinander angeordneten Profilen 5 und einer ebenen, unter den winkelförmigen Profilen 5 angeordneten Platte 6. Während die winkelförmigen Profile 5 sich keilförmig von oben nach unten verengende schlitzförmige Durchlaßöffnungen 7 begrenzen, sind in der Platte 6 unverengte schlitzförmige Durchlaßöffnungen 8 vorgesehen, wobei die Durchlaßöffnungen 7 versetzt zu den Durchlaßöffnungen 8 angeordnet sind.

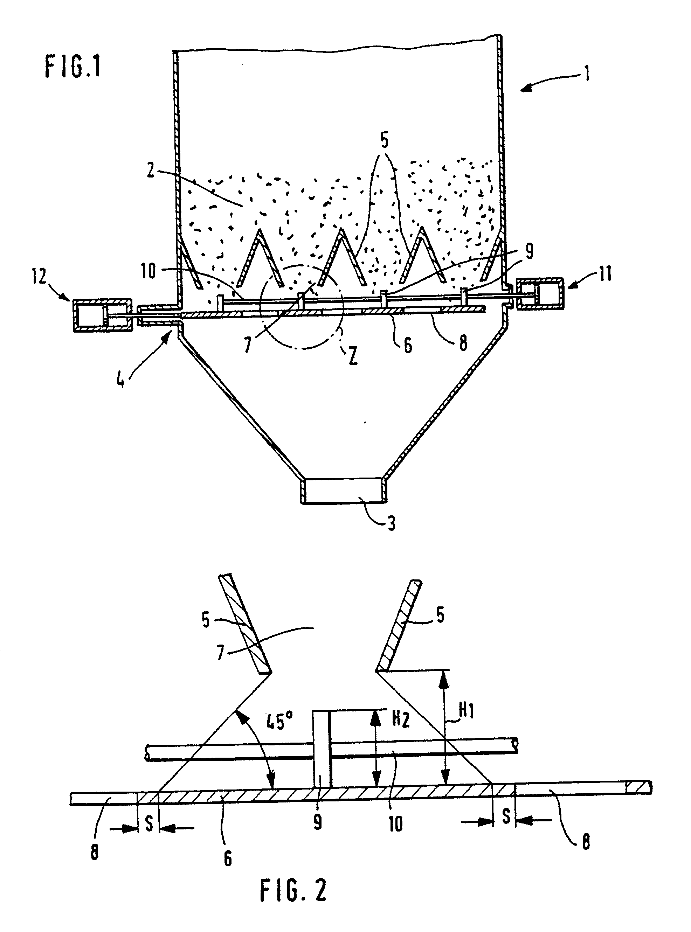

Wie insbesondere Fig. 2 zeigt, sind die Breite der schlitzförmigen Durchlaßöffnungen 7 und 8, die Projektionsbreite der winkelförmigen Profile 5 und die Breite der öffnungsfreien Bereiche der Platte 6 wie auch der Abstand H1 zwischen den Unterkanten der Profile 5 und der Oberseite der Platte 6 so aufeinander abgestimmt, daß sich bei einem Schüttwinkel des Adsorptionsmittel von 45° auf der Platte 6 Adsorptionsmittelanhäufungen bilden, die eine bestimmte Grundflächenbreite nicht überschreiten. Aus Sicherheitsgründen ist der Abstand zwischen zwei benachbarten Durchlaßöffnungen 8 um den Betrag 2 x s größer als die Breite der Auflagefläche des Adsorptionsmittels. Haben sich somit die Adsorptionsmittelanhäufungen auf der Platte 6 gebildet, verhindern diese, daß darüber hinaus Adsorptionsmittel die Durchlaßöffnungen 7 und 8 passieren und unkontrolliert abfließen kann.

Über die Oberseite der Platte 6 sind vertikal ausgerichtete Schieber 9, die durch ein Gestänge 10 miteinander gekuppelt sind, mit Hilfe einer Zylinder-Kolbenstangen-Einheit 11 hin- und herverfahrbar. Durch das Verfahren der Schieber 9 wird das auf der Platte 6 angehäuft Adsorptionsmittel in die Bereiche der Auslaßöffnungen 8 verschoben, fällt durch diese hindurch und kann sodann über die Abführöffnung 3 aus dem Behälter 1 abgezogen werden.

Da die Höhe H2 der Schieber 9 wesentlich kleiner ist als der Abstand H1 zwischen den Unterkanten der Profile 5 und der Oberseite der Platte 6, behindern auch im Adsorptionsmittel enthaltene Fremdkörper mit verhältnismäßig großen Abmessungen die Hin- und Herverfahrbarkeit der Schieber 9 nicht.

Auch die Platte 6 ist über eine Kolbenstangen-Einheit 12 aus ihrer in der Zeichnung dargestellten Normalposition so verschiebbar, daß ihre Durchlaßöffnungen 8 mit den Durchlaßöffnungen 7 zwischen den winkelförmigen Profilen 5 fluchten. In dieser Position kann die Schüttgutsäule kontinuierlich den Rost 4 passieren, da dieser dabei seine Abstützfunktion aufgegeben hat. Dadurch kann im Bedarfsfall beispielsweise dann, wenn das Adsorptionsmittel in Brand geraten sollte, eine spontane Entleerung des Behälters 1 erfolgen und der Brandherd in einen zur Bekämpfung zugänglicheren Bereich verlagert werden.

## Ansprüche

1. Schüttbettfilter zum Reinigen von gas- und/oder dampfförmigen Medien aus einem ein Adsorptionsmittel aufnehmenden Behälter, der eine obere Zuführöffnung und eine untere Abführöffnung für das im Behälterinnern eine Schüttgutsäule bildende, vom zu reinigenden Medium durchströmte Adsorptionsmittel aufweist, wobei die Schüttgutsäule durch einen sich über einen horizontalen Querschnitt des Behälterinnenraums erstreckenden Rost abgestützt ist, der aus in Abständen angeordneten, winkelförmigen Profilen, die von oben nach unten keilförmig verengte Duchlaßöffnungen für das Adsorptionsmittel begrenzen, und aus einer unter den winkelförmigen Profilen angeordneten, gleichfalls Durchlaßöffnungen aufweisenden und zusätzlich mit horizontal verschiebbaren Elementen ausgestatteten Staueinrichtung besteht, dadurch gekennzeichnet, daß die Staueinrichtung aus einer ebenen Platte (6) gebildet ist, auf die sich infolge des gewählten Abstands zwischen der Platte (6) und den Unterkanten der winkelförmigen Profile (5) sowie infolge des gewählten Abstands zwischen benachbarten Durchlaßöffnungen (8) in der Platte (6) sowie infolge der versetzten Anordnung der durch die winkelförmigen Profile (5) begrenzten Durchlaßöffnungen (7) gegenüber den in der Platte (6) vorgesehenen Durchlaßöffnungen (8) Adsorptionsmittel aufhäuft und ein Adsorptionsmittelabfluß verhinderbar ist, und daß über die Oberseite der Platte (6) vertikal ausgerichtete Schieber (9) horizontal so hin- und herverfahrbar sind, daß das jeweils auf der Platte (6) angehäufte Adsorptionsmittel in den Bereich der in der Platte (6) vorgesehenen Durchlaßöffnungen (8) verschiebbar ist.

2. Schüttbettfilter nach Anspruch 1, dadurch gekennzeichnet, daß die durch die winkelförmigen Profile (5) begrenzten Durchlaßöffnungen (7) und die in der ebenen Platte (6) vorgesehenen Durchlaßöffnungen (8) durch sich über eine Querschnittsabmessung des Behälterinnern erstreckende Schlitze gebildet sind.

3. Schüttbettfilter nach Anspruch 2, dadurch gekennzeichnet, daß der senkrechte Abstand benachbarter Schlitze in der ebenen Platte (6) um einen Sicherheitsbetrag (2 x s) größer ist als die Breite der Grundfläche einer durch den Schüttwinkel und den Abstand der Platte (6) von den Unterkanten der winkelförmigen Profile (5) definierten Adsorptionsmittelanhäufung.

4. Schüttbettfilter nach mindestens einem der Ansprüche 1 bis 3, dadurch gekennzeichnet, daß die über die Oberseite der Platte (6) hin- und herverfahrbaren Schieber (9) eine wesentlich niedrigere Höhe aufweisen als der Abstand (H1) zwischen der Oberseite der Platte (6) und den Unterkanten der winkelförmigen Profile (5).

5. Schüttbettfilter nach mindestens einem der Ansprüche 1 bis 4, dadurch gekennzeichnet, daß unabhängig von den über die Oberseite der Platte (6) hin- und herverfahrbaren Schiebern (9) die Platte (6) durch eine horizontale Verlagerung in eine Position überführbar ist, bei der die durch die winkelförmigen Profile (5) begrenzten Durchlaßöffnungen (7) mit den in der Platte (6) vorgesehenen Durchlaßöffnungen (8) fluchten.

6. Schüttbettfilter nach mindestens einem der Ansprüche 1 bis 4, dadurch gekennzeichnet, daß die Schieber (9) und/oder die Platte (6) jeweils beiderseits des Behälters (1) mit umsteuerbaren Antriebseinrichtungen versehen sind, so daß die die Antriebskraft übertragenden Kupplungselemente der Schieber (9) bzw. der Platte (6) ausschließlich auf Zug beansprucht werden.

FIG.1

FIG. 2

Europäisches Patentamt

**EUROPÄISCHER RECHERCHENBERICHT**

Nummer der Anmeldung

EP 90 11 1555

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-3 638 391 (H. WETTERMANN) <br> * Figur 1; Spalte 4, Zeilen 23-44 * <br> --- | 1,2,4,6 | B 01 D 53/08 <br> B 01 J 8/12 |
| D,X | DE-A-3 406 413 (KWU) <br> * Figuren 1-8 * <br> --- | 1 | |
| A | EP-A-0 225 475 (KWU) <br> * Figuren 1-20 * <br> --- | 1 | |
| D,A | DE-A-3 228 984 (KWU) <br> * Figuren 1-6 * <br> ----- | 1 | |

| | RECHERCHIERTE SACHGEBIETE (Int. Cl.5) |
|---|---|
| | B 01 D <br> B 01 J |

Der vorliegende Recherchenbericht wurde für alle Patentansprüche erstellt

| Recherchenort | Abschlußdatum der Recherche | Prüfer |
|---|---|---|
| DEN HAAG | 28-08-1990 | KANOLDT W.W. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

................................................................
& : Mitglied der gleichen Patentfamilie, übereinstimmendes Dokument

EPO FORM 1503 03.82 (P0403)